# EUROPEAN PATENT APPLICATION

(11) **EP 2 452 768 A1**
(43) Date of publication of application: **16.05.2012**
(21) Application number: 10797130.1
(22) Date of filing: 06.07.2010
(51) Int. Cl.: B23B 1/00, B23B 31/02, B29C 33/12, B29C 45/14, B29C 45/26

(54) **WORKPIECE MATERIAL AND GRASPING MECHANISM**

(30) Priority: 09.07.2009 JP 2009162709; 24.03.2010 JP 2010067961
(71) Applicant: Citizen Holdings Co., Ltd., Nishitokyo-shi, Tokyo 188-8511 (JP); Citizen Machinery Miyano Co., Ltd., Nagano 389-0206 (JP)
(72) Inventor: NAKAYA, Takaichi, Kitasaku-gun Nagano 389-0294 (JP); KASUYA, Hiroshi, Kitasaku-gun Nagano 389-0294 (JP)
(74) Representative: Borchert, Uwe Rudolf
(86) International application number: PCT/JP2010/061471
(87) International publication number: WO 2011/004819

(57) **Abstract**

There are provided a work material and a gripping mechanism capable of shortening a handling time not involved in works, shortening a time required for producing a plurality of finished members as a whole, accurately positioning the work material even if there is an axial dimension error, lessening waste of a material and lightening a burden for disposing discharged chips. The work material (100) has a shape in which a plurality of raw blanks (101) that become products by material removing works is integrally molded. The gripping mechanism (110) comprises a free moving means (120) that relatively and freely moves a gripper (112) and the work material (100) and a positioning means for defining axial gripping position of the gripper (112) and the work material (100).

## Description

### Technical Field

The present invention relates to a work material and a gripping mechanism.

### Background Art

Hitherto, it is a widely and commonly used technology to grip a work material by a gripping mechanism and to produce products by removing a material to be removed from a material removing part. Then, various technologies are known to facilitate positioning in gripping the work material and to shorten a time required for the works.

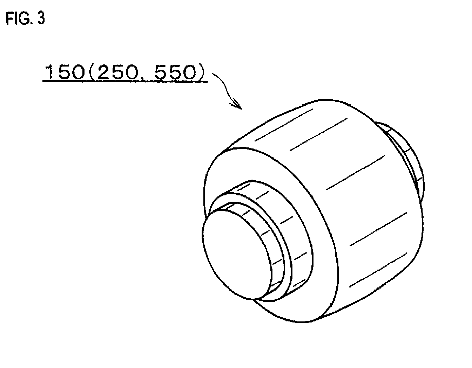

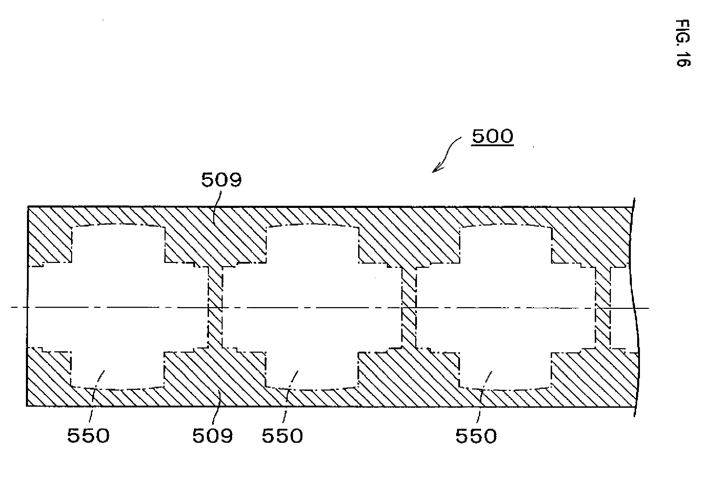

When a part as shown in FIG. 3 is to be produced as a product 550 for example, it is known to use a long round bar as a work material 500 as shown in FIG. 16 to produce a plurality of products 550. It is possible to produce the plurality of products 550 consecutively by setting the work material 500 once, repeating works of cutting (material-removing) and separating parts of the work material 500 while gripping it by a gripping mechanism provided on a spindle of an automatic lathe and sequentially feeding and then positioning the work material 500. The positioning of the work material is carried out by feeding the work material so that an end thereof butts against a positioning stopper and by gripping the work material at that position every time when one work is completed (see Patent Document 1 for example).

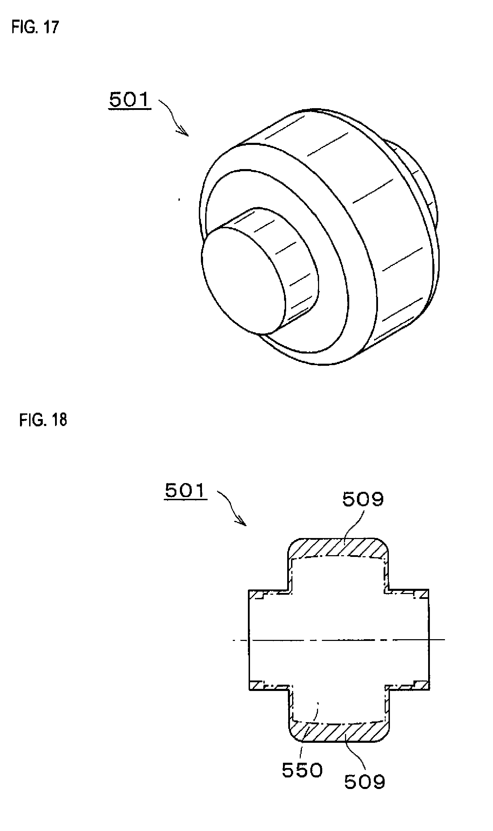

There is also known to produce the product 550 by forming a raw blank 501 whose outer shape is slightly larger than and is analogous to an outer shape of the product 550 in advance and by repeating cutting (material-removing) works while gripping the work material individually and sequentially by a gripping mechanism provided in a spindle of an automatic lathe as shown in FIGs. 17 and 18.

### Prior Art Document

[Patent Document 1] Japanese Patent No. 3954965 (whole pages, whole drawings)

### Disclosure of Invention

### Problems to be solved by the Invention

However, when the long round bar is used as the work material 500 and the cutting (material-removing) and separating works are repeated while sequentially feeding the rod by the automatic lathe as described in the former case, there are problems that there is much material part 509 to be removed by cutting as shown in FIG. 16, waste of the material increases and a burden for disposing discharged chips also increases. There are also other problems that because there is the much material part 509 to be removed by cutting, a work time per one product is prolonged, a burden applied to working tools and machines becomes large, a power consumption increases and lives of the tools and machines drop.

Still more, when the cutting work is carried out on the raw blank 501 whose outer shape is slightly larger than and is analogous to the outer shape of the product 550 as described in the latter case, there is a problem that the raw blank has to be attached to and removed from the working machine one by one and a time required for producing the plurality of products 550 takes a long time as a whole even though it is possible to solve the problems of the former case by a certain degree. In some cases, the time required for producing the products becomes longer than the former case.

In order to solve these problems, the inventor of the present invention has found that it becomes possible to lessen the waste of the material by reducing the material removing parts from each raw blank, to decrease the burden for disposing the discharged chips, to reduce the burden otherwise applied to the cutting tools and the automatic lathe, to reduce the power consumption and to improve the lives of the tools and machines by forming the work material into a shape in which a plurality of raw blanks that become products by a material removing work is integrally molded.

However, when such work material having the shape in which the plurality of raw blanks that become the products through the material removing work is integrally molded is worked, there arises a new problem that it may be unable to position the work material accurately even if its edge is butted against the stopper due to a form error and the like similarly to the cases of using the long round bar and of attaching and removing the raw blanks having the shape slightly larger and analogous to the outer shape of the product one by one.

When the work material has the shape in which the plurality of raw blanks that become the products through the material removing work is integrally molded in particular, position aberration in an axial direction of the shapes of the raw blanks and parts to be worked accumulates as the raw blanks are sequentially fed due to an error in fabricating the work material and to an axial dimension error caused by thermal deformation and the like.

Accordingly, when the work material has the shape in which the plurality of raw blanks that become the products through the material removing work is integrally molded as described above, there is a problem that it becomes necessary to take such a measure of leaving an extra margin of work in the axial direction by considering such error caused by the position aberration for example. Then, the advantageous effects of reducing the waste of the material and of lightening the burden for disposing the discharged chips by reducing the material removing parts is possibly limited. There is another problem that the margin of work runs short and it becomes impossible to work when the error is large.

### Means for Solving the Problems

The following means are taken in order to solve the aforementioned problems. That is, according to a first aspect of the invention, a work material for producing a plurality of products by machining material removing parts by material removing works is formed into a shape in which a plurality of raw blanks that become the products by the material removing works is integrally molded.

According to a second aspect of the invention, each of the raw blanks is integrally formed so as to be aligned in a row while having margins of separation between the respective raw blanks.

According to a third aspect of the invention, each of the raw blanks has a through hole and is integrally formed by being fixed to a rod member that penetrates through the through hole.

According to a fourth aspect of the invention, the material removing work is a cutting work, including a separating work, carried out consecutively and sequentially on each raw blank.

According to a fifth aspect of the invention, the respective raw blanks include ones for obtaining products having different shapes.

According to a sixth aspect of the invention, a plurality of gripped portions that define axial gripping positions of each raw blank is integrally formed corresponding to each of the plurality of raw blanks.

According to a seventh aspect of the invention, the gripped portion is composed of each raw blank.

According to an eighth aspect of the invention, the gripped portion is provided at a separation part adjoining each raw blank.

According to a ninth aspect of the invention, the gripped portion is composed of an irregular portion.

According to a tenth aspect of the invention, the gripped portion is composed of a tapered surface.

According to an eleventh aspect of the invention, the gripped portion closest to the raw blank to be worked is gripped in the material removing work of the predetermined raw blank.

According to a twelfth aspect of the invention, a gripping mechanism having a gripper for gripping a work material in a spindle comprises a free moving means for relatively freely moving the spindle and the work material in an axial direction and a positioning means for positioning relative position of the work material and the spindle at predetermined position in the axial direction set in advance, wherein the positioning means is arranged, in gripping the work material, so as to relatively and freely move the spindle and the work material by the free moving means and to grip the work material by the gripper in the condition in which the spindle and the work material are positioned.

According to a thirteenth aspect of the invention, the positioning means is what freely moves one of the spindle and the work material in the axial direction while fixing the other one.

According to a fourteenth aspect of the invention, the gripping mechanism further comprises a feed moving means for work-feeding the spindle in the axial direction, wherein the feed-moving means is used also as the free moving means as drive and fixation thereof is released in gripping the work material by the gripper.

According to a fifteenth aspect of the invention, the positioning means is composed of a tapered surface provided at least at one of the gripped portion of the gripper and the work material.

### Advantageous Effects

According to the work material of the first aspect of the invention, because the work material has the shape in which the raw blanks that become the products by the material removing work are integrally molded and the material removing parts can be reduced, it becomes possible to lessen waste of the material, to lighten a burden for disposing discharged chips and to shorten a work time per product. Still more, a load applied to the working tools and machines is reduced, power consumption is reduced and lives of the tools and machines are improved.

Still more, because it becomes possible to repeat the material removing and separating works by sequentially feeding the work material similarly to a case of working a rod member such as a standard round bar, it is possible to shorten a handling time not involved in the work and to shorten a time required for producing the plurality of products as a whole.

According to the work material of the second aspect of the invention, the work material itself can be easily manufactured and the time required for producing the plurality of products can be shortened further.

According to the work material of the third aspect of the invention, because the respective raw blanks are integrally formed by being fixed to the rod member, the work material can be formed as a rigid bar member regardless of the material of the raw blank and the work material can be readily manufactured by the raw blanks composed of various materials.

According to the work material of the fourth aspect of the invention, the invention exhibits the advantageous effects further in a cutting work such as an automatic lathe.

According to the work material of the fifth aspect of the invention, it is possible to work consecutively without prolong the whole required time even if the work material includes products having different shapes.

According to the work material of the sixth aspect of the invention, because gripped portions that define the axial gripping positions of each raw blank are integrally formed corresponding to the plurality of raw blanks, the work material sequentially fed after the material removing and separating works of one raw blank is positioned with respect to the spindle by absorbing an error every time when one raw blank is fed and the gripped portion is gripped by the gripper of the spindle. Therefore, no dimension error in the axial direction, otherwise caused by the error in fabricating the work material, by thermal deformation and others, is accumulated. Accordingly, it becomes possible to lessen the material removing part further, to reduce the waste of the material, to lighten the burden for disposing the discharged chips and to prevent unworkable parts from being otherwise caused by the accumulation of the dimension error.

According to the work material of the seventh through tenth aspects of the invention, the gripped portion can be configured easily.

According to the work material of the eleventh aspect of the invention, it becomes possible to shorten a distance between the gripped portion and the worked part and to work accurately with less error.

According to the gripping mechanism of the twelfth aspect of the invention, because the positioning means is arranged, in gripping the work material by the gripper, so as to relatively and freely moves the spindle and the work material by the free moving means and to grip the work material by the gripper at the axially predetermined position set in advance in the condition in which the spindle and the work material are positioned, it is possible to absorb even a form error by the free moving means and to grip the work material by positioning the spindle and the work material properly.

Still more, because it is possible to absorb the error and to position every time when one raw blank is fed in working the bar-like work material in which the plurality of raw blanks is integrated, the axial dimension error caused by the form error, thermal deformation and the like is barely accumulated. Thereby, it becomes possible to reduce the material removing part, to lessen the waste of the material, to lighten the burden for disposing the discharged chips. It becomes also possible to prevent the unworkable part from being otherwise caused by the accumulation of the dimension error and to shorten the time required for producing the plurality of products as a whole.

According to the gripping mechanism of the thirteenth and fourteenth aspects of the invention, the free moving means can be configured with a simple structure.

According to the gripping mechanism of the fifteenth aspect of the invention, it becomes possible to integrally configure the gripper and the positioning section with the simple structure and to position while carrying out the gripping operation.

### Brief Description of Drawings

FIG. 1 is a side view of a work material of a first embodiment of the invention.
FIG. 2 is an enlarged explanatory drawing of an edge portion of the work material shown in FIG. 1.
FIG. 3 is a perspective view of a product.
FIG. 4 is an enlarged side view of a work material of a second embodiment of the invention.
FIG. 5 is an explanatory drawing of a work material of a third embodiment and a gripping mechanism of the invention.
FIG. 6 is an explanatory drawing of a work material of a fourth embodiment and a gripping mechanism of the invention.
FIG. 7 is an explanatory drawing in working an outer shape of the work material of the first embodiment shown in FIG. 1.
FIG. 8 is an explanatory drawing after working the outer shape of the work material of the first embodiment shown in FIG. 1.
FIG. 9 is an explanatory drawing after a separation work of the work material of the first embodiment shown in FIG. 1.
FIG. 10 is an explanatory drawing after feeding the raw blank of the work material of the first embodiment shown in FIG. 1.
FIG. 11 is a side view of the gripping mechanism of one embodiment of the invention before gripping the work material.
FIG. 12 is a side view of the gripping mechanism shown in FIG. 11 after gripping and before positioning the work material.
FIG. 13 is a side view of the gripping mechanism shown in FIG. 11 after positioning the work material.
FIG. 14A is an explanatory drawing of an operation sequence of the gripping mechanism of the invention.
FIG. 14B is an explanatory drawing of the operation sequence of the gripping mechanism shown in FIG. 14A.
FIG. 14C is an explanatory drawing of the operation sequence of the gripping mechanism continued from what shown in FIG. 14B.
FIG. 14D is an explanatory drawing of the operation sequence of the gripping mechanism continued from what shown in FIG. 14C.
FIG. 14E is an explanatory drawing of the operation sequence of the gripping mechanism continued from what shown in FIG. 14D.
FIG. 14F is an explanatory drawing of the operation sequence of the gripping mechanism continued from what shown in FIG. 14E.
FIG. 15 is an explanatory drawing of an operation of another example of the gripping mechanism of the invention.
FIG. 16 is an enlarged explanatory drawing of an edge portion of a prior art work material.
FIG. 17 is a perspective view of a prior art raw blank.
FIG. 18 is an explanatory drawing of a side of the raw blank shown in FIG. 17.

### Best Modes for Carrying Out the Invention

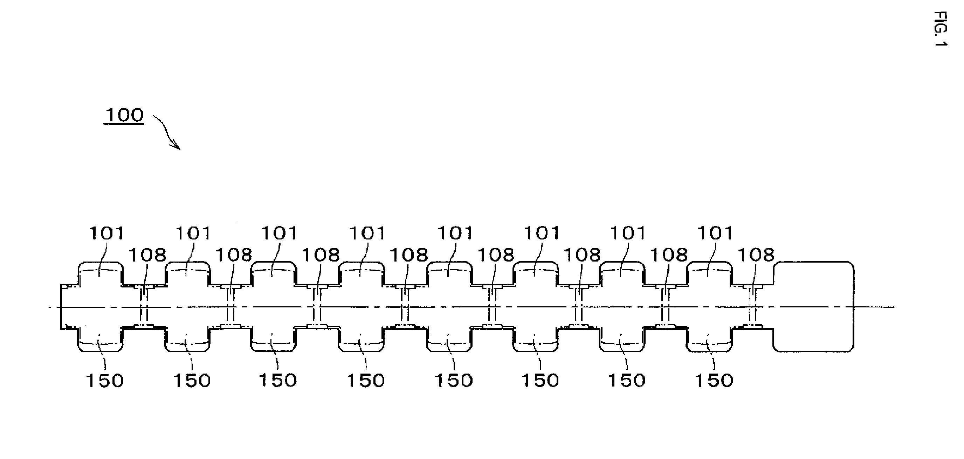

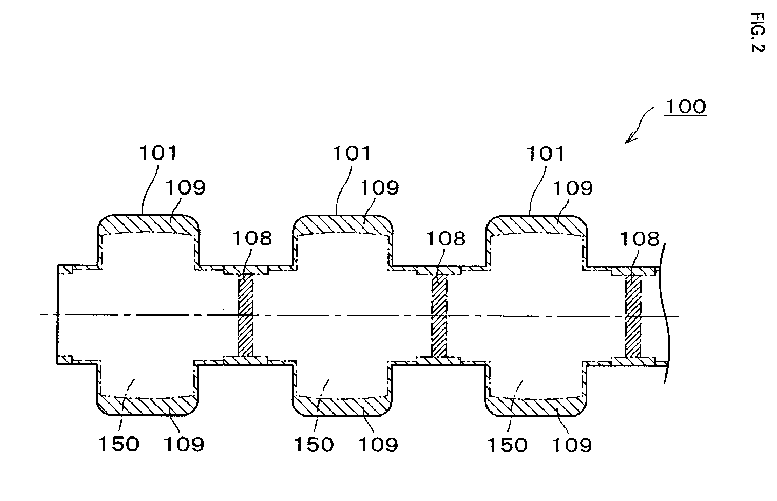

At first, a work material 100 of a first embodiment of the invention will be explained. As shown in FIGs. 1 and 2, the work material 100 is composed of a plurality of raw blanks 101 aligned in a row and integrally formed by one material while interposing margins of separation 108 between them.

Each raw blank 101 has a required material removing part 109 around the raw blank so that the raw blank becomes one product by a material removing work such as a cutting work and has a shape analogous to an outer shape of a product 150 as shown in FIG. 3. It is noted that the product can be a finished product whose work has been completed or be a semi-fnished product which requires a secondary work.

The work material 100 can be one which is integrally molded by casting or forging or is molded by means of plastic working such as press working, as long as its material is a metallic material. Another working process such as bonding of plural metallic materials can be also carried out in the same time in forming the raw blank. Still more, the work material 100 can be molded integrally by molding by dies and the like, injection molding and press molding if the material is a resin material, ceramic, sintered metal and the like. The work material 100 can be what individual raw blanks are integrally molded by various works such as soldering, bonding, press-fitting, caulking, pressure-welding, pressure-joining and the like,

Still more, although the case of producing the same products 150 by forming all of the raw blanks 101 into the same shape has been shown in the abovementioned example, the work material may be what raw blanks having different shapes are aligned in a row by providing margin of separation to produce products having different shapes.

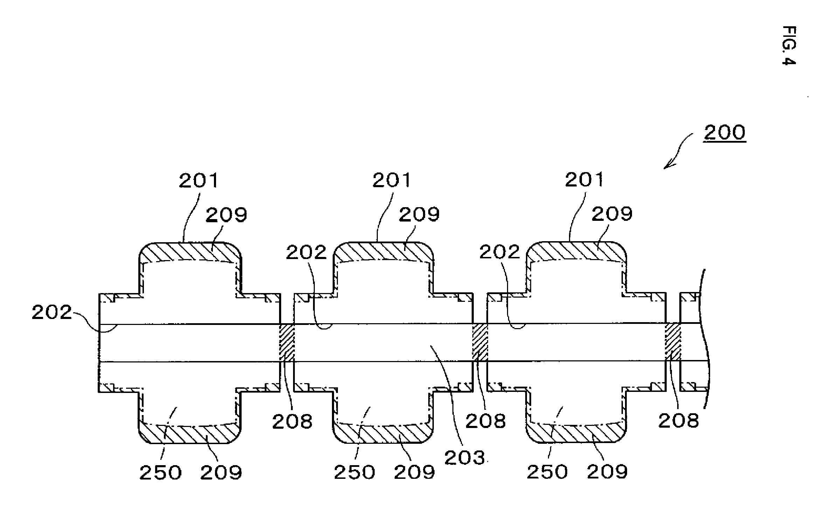

As shown in FIG. 4, a work material 200 of a second embodiment of the invention is fabricated such that a plurality of raw blanks 201 each having a through hole 202 is integrally aligned in a row, while having a margin of separation between the raw blanks, by fitting and fixing the raw blanks to a through rod 203.

An outer shape of each raw blank 201 is formed into a shape having a required material removing part 209 around it and analogous to the outer shape of a product 250 shown in FIG. 3 in the same manner with the first embodiment described above.

The through rod 203 may be a same material with or a different material from the raw blank 201 as long as it is a rigid body having a level of rigidity capable of maintaining accuracy during the material removing work. When the raw blank is formed by a material whose rigidity is low such as resin in particular, it becomes possible to enhance the rigidity of the work material 200 as a whole by the rigidity of the through rod 203, to improve the accuracy during the material removing work and to facilitate handling of the work material.

The through rod 203 can be fixed to the through hole 202 by any means, as long as no trouble occurs during the material removing work, such as press-fitting or implanting of the through rod 203 into the through hole 202 and welding and bonding, It is noted that the through rod 203 may be used as a core bar as part of the product or may be pulled out by providing a process of removing the through rod 203 from the through hole 202 after completing the material removing work.

Still more, because the plurality of raw blanks 201 each having the through hole 202 is aligned in a row tightly with each other and is fitted and fixed to the through rod 203, they can be integrally formed. In this case, although the separating work cannot be carried out and the work material 200 has to be handled in a condition in which the plurality of products 250 is integrally formed even after when the material removing work of all of the raw blanks 201 is completed, it is possible to shorten a work time by eliminating the separating works and to remove the through rod 203 from the through holes 202 at once, thus shortening a time rather than the case of removing the through rod 203 individually cut from the individual product 250.

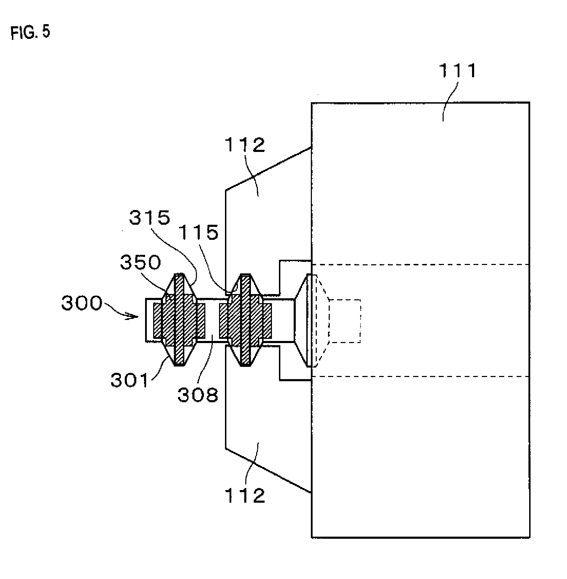

As shown in FIG. 5, a work material 300 of a third embodiment of the invention is fabricated such that a plurality of raw blanks 301 is aligned in a row while having a margin of separation 308 between them and is integrally formed by a single material.

Each raw blank 301 has a required material removing part around thereof so that it becomes one product 350 by a material removing work such as a cutting work. Its outer shape is convex in section having tapered surfaces before and after its apex in the axial direction. Thereby, the tapered surface of each raw blank 301 forms a gripping surface 315, i.e., a gripped portion, to be gripped by a gripper 112 provided in front of a spindle 111 (both are described in detail later).

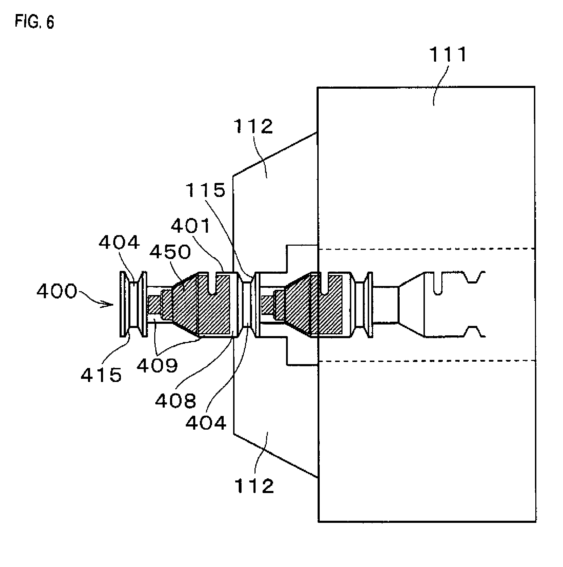

As shown in FIG. 6, a work material 400 of a fourth embodiment of the invention is fabricated such that a plurality of raw blanks 401 is aligned in a row while having a margin of separation 408 and a gripping boss 404 between them and is integrally formed by a single material.

Each raw blank 401 has a required material removing part 409 around thereof so that it becomes one product 450 through a material removing work such as a cutting work. The gripping boss 404 is provided integrally with the margin of separation 408 adjoining each raw blank 401. The gripping boss 404 is formed into a concave shape in section having front and rear tapered surfaces in the axial direction. Thereby, the respective gripping bosses 404 configure gripped portions that are gripped by the gripper 112. It is noted that although the gripping bosses 404 are described as a tapered groove in FIG. 6, the shape of the gripped portions 404 is not limited to that as long as the gripped portions are projecting bosses.

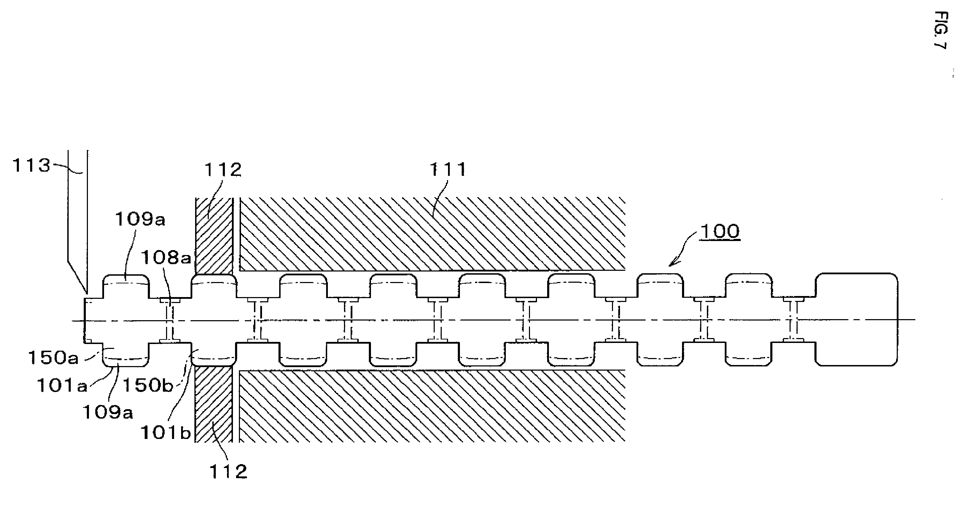

Next, operations in working the work materials of the invention by a standard automatic lathe will be explained by exemplifying the work material 100. At first, as shown in FIG. 7, the work material 100 is inserted into a spindle 111 of the automatic lathe from the right side in the drawing and is fixed and gripped at behind position (in the right side in the drawing)by the gripper 112 provided on the spindle 111 side in a condition in which a raw blank 101a at the edge thereof projects to a working position in front (in the left side in the drawing) of the gripper 112.

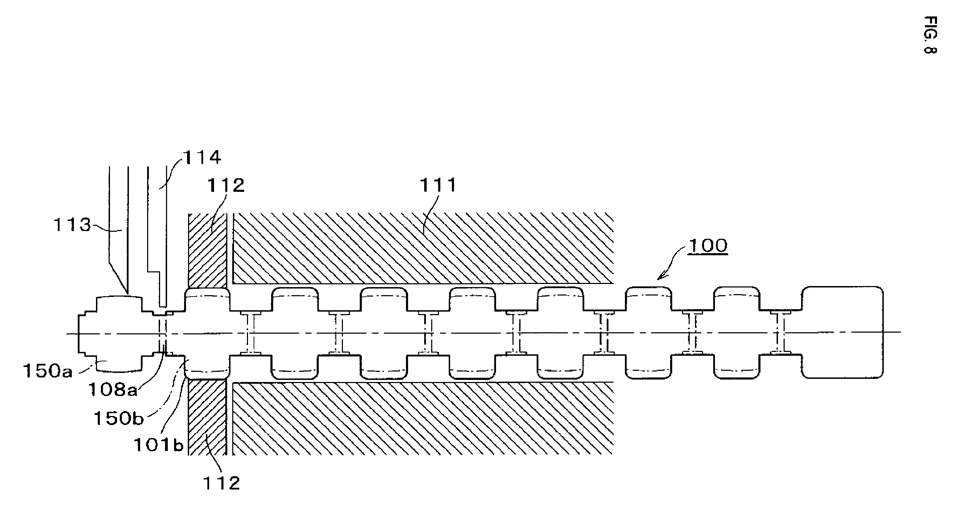

When the spindle 111 is rotated together with the gripper 112, the work material 100 rotates centering on its axis and a material removing part 109a of the raw blank 101 a is cut by the cutting tool 113 of the automatic lathe. Then, the raw blank 101a a becomes a product 150a by leaving the margin of separation 108a as shown in FIG. 8.

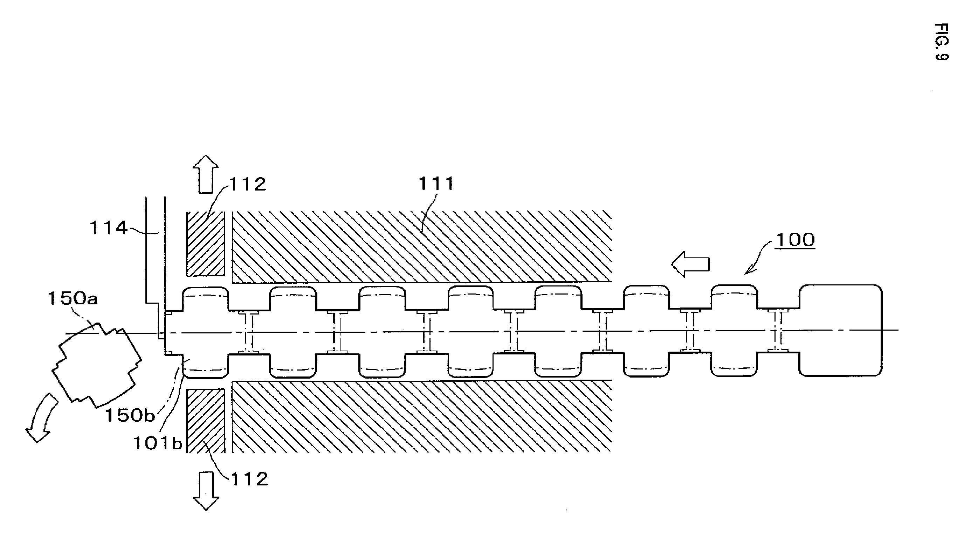

Next, when the separating tool 114 (piercing bite) works on the margin of separation 108a and the product 150a is separated from the work material 100, thus finishing the work, as shown in FIG. 9, the separating tool 114 is set back, the gripper 112 is opened and then the work material 100 is fed forward.

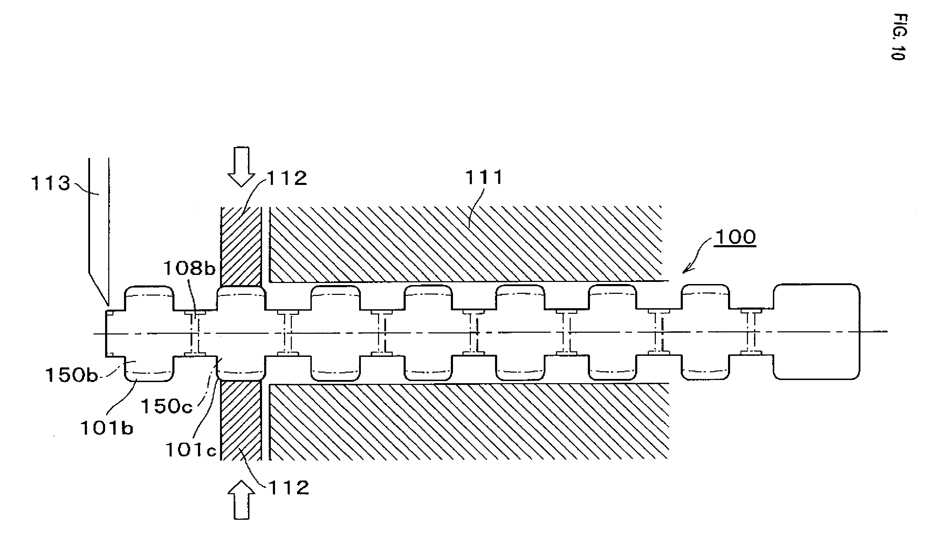

Then, as shown in FIG. 10, the work material 100 is fixed in a condition in which a raw blank 101b to be worked next projects out to the working position in front of the gripper 112 by being gripped by the gripper 112 at the position behind that. Then, the raw blank 101b is started to be worked.

Thus, by repeating these processes, it becomes possible to work the plurality of raw blanks 101 consecutively by supplying the work material 100 once to the automatic lathe, to produce the plurality of products 150, to shorten a handling time not involved in working and to shorten a time required for the work as a whole.

Still more, it becomes possible to reduce the waste of the material, to lighten a burden for disposing the discharged chips and to shorten a work time per unit product. Furthermore, it becomes possible to lighten the burden applied to the cutting tools and automatic lathe, to reduce power consumption and to improve lives of the tools and machine.

It is noted that although the operation for working the work material 100 by the automatic lathe has been explained above, any machine tool such as a press working machine, a laser working machine, a grinding machine and the like can be used as long as the working machine is capable of repeating the material removing and separating works on the work material while sequentially feeding the work material.

Still more, the shape of the plurality of raw blanks composing the work material can be a shape other than the round shape as described above as long as the work material is configured so that it can be sequentially fed and consecutively worked.

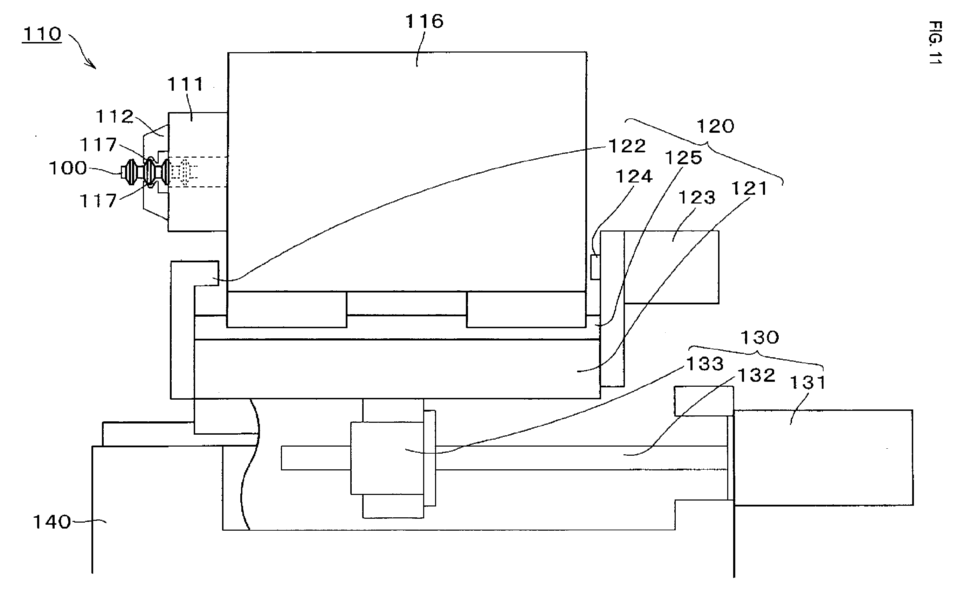

FIG. 11 shows a spindle part of a machine tool to which one embodiment of the gripping mechanism of the invention is applied and an example for gripping the work material 300 of the third embodiment of the invention. The machine tool has a base 140 provided with a ball screw shaft 132 which is rotated and driven by a motor 131 provided in the base 140. The ball screw shaft 132 is attached with a ball nut 133 that reciprocates as the ball screw shaft 132 is rotated.

The ball nut 133 is fixed with a slide table 121. The slide table 121 reciprocates along the ball screw shaft 132 as the ball nut 133 reciprocates. Position of the slide table 121 is controlled by a control means not shown. A rail 125 that extends in the same direction with the axial direction of the ball screw shaft 132 is installed on an upper surface of the slide table 121.

The rail 125 freely movably supports a spindle table 116 and the spindle table 116 supports a spindle 111 rotably. The spindle 111 is supported so that its axial direction coincides with the direction in which the ball screw shaft 132 and the rail 125 extend. The rail 125 has a stopper 122 that is capable of butting with one end of the spindle table 116 at one end thereof and a cylinder 123 mounted on another end on the slide table 121. The cylinder 123 is provided with a piston 124 that is capable of butting with the spindle table 116.

The spindle table 116 is pressed toward the stopper 122 side when the piston 124 is projected. That is, the spindle table 116 is sandwiched by the stopper 122 and the piston 124. The spindle table 116 is fixedly positioned at predetermined position with respect to the slide table 121 by being sandwiched by the stopper 122 and the piston 124. The spindle table 116 can freely and slidably move between the piston 124 and the stopper 122 by contracting the piston 124 and by releasing the pressure of the piston 124 applied to the spindle table 116 toward the stopper 122.

A free moving means 120 for supporting the spindle 111 so as to be freely movable along the axial direction is composed of the slide table 121, the rail 125, the piston 124 and the stopper 122, and a feed moving means 130 for work-feeding the spindle 111 along the axial direction is composed of the motor 131, the ball screw shaft 132 and the ball nut 133. The free moving means 120 can switch over the positioning and fixation and the free move of the spindle 111 with respect to the slide table 121 by projecting/contracting the piston 124.

The spindle 111 is provided with the gripper 112 for gripping the work material 300 at an edge thereof. The gripper 112 is composed of a plurality of gripping claws which are axially fixed with the spindle 111 and which advance and set back in the radial direction. Each gripping claw is provided with a concave portion 117 formed at an edge thereof. The concave portion 117 has gripping surfaces 115 each formed of a tapered surface before and after thereof in the axial direction. The gripping surfaces 115 are configured so as to butt and engage with the gripping surfaces 315 of the raw blank 301 with each other.

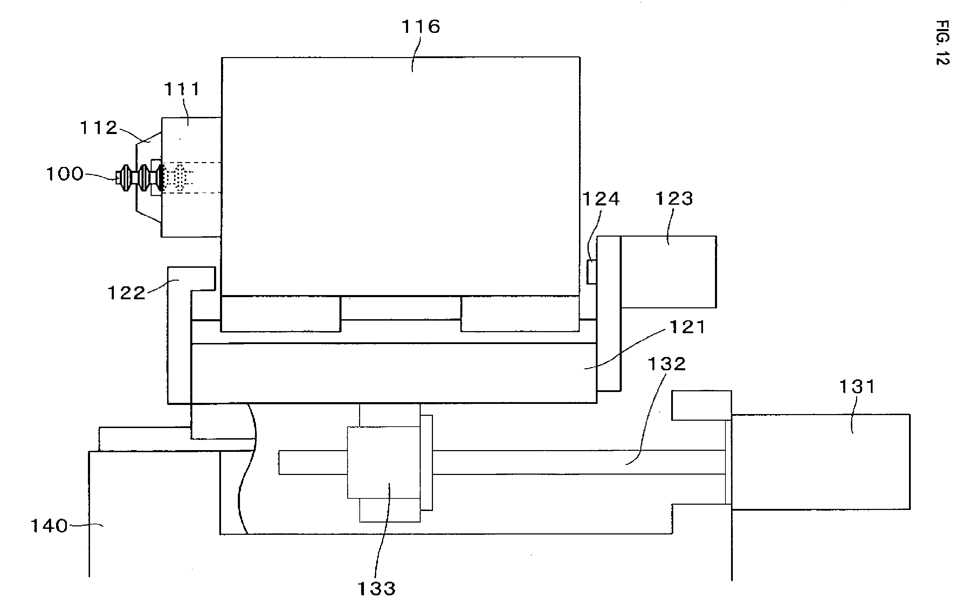

As shown in FIG. 12, the spindle 111 grips the work material 300 by sandwiching the gripped portion (predetermined raw blank 301) by the concave portion 117 of each gripping section 112.

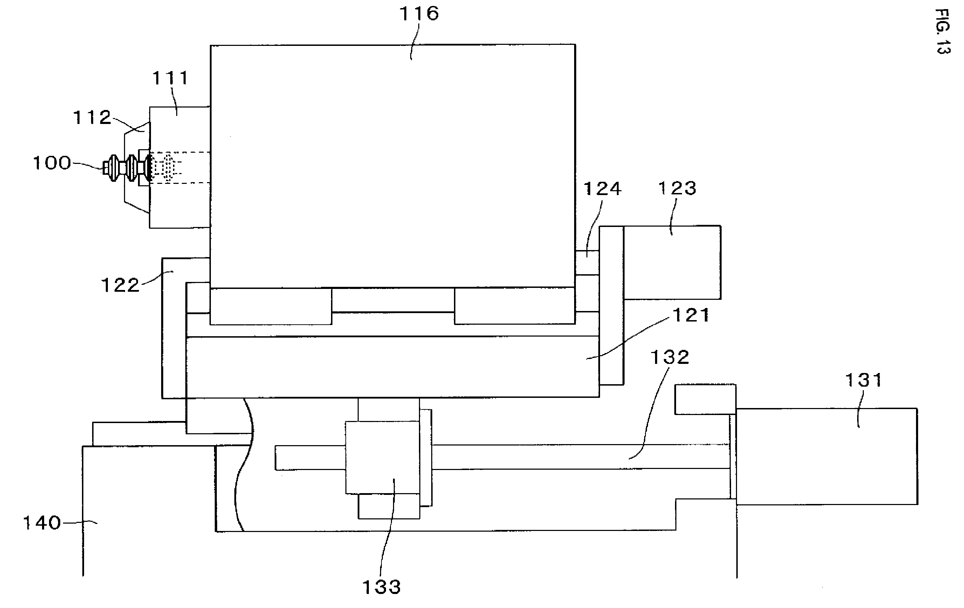

Then, it becomes possible to work the work material 300 gripped by the spindle 111 by positioning and fixing the spindle table 116 (the spindle 111) with respect to the slide table 121 as shown in FIG. 13 while gripping the work material 300 by the spindle 111 and by work-feeding by the feed moving means 130.

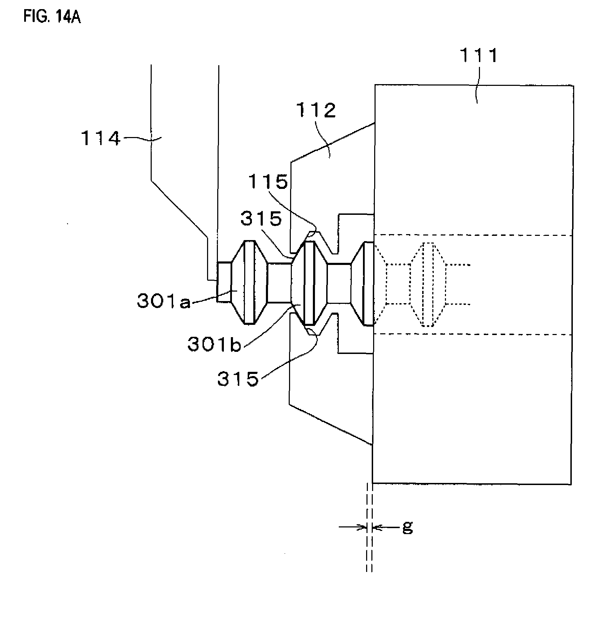

Next, an operation for working the work material 300 by the automatic lathe described above will be explained in detail. At first, as shown in FIG. 14A, the work material 300 is inserted into the spindle 111 of the automatic lathe from the right side in the drawing so that the work material 300 is positioned by butting the edge thereof against the stopper for example and so that the raw blank 301 a at the edge projects to the working position in front of (on the left side in the drawing) the gripper 112. Thereby, the work material 300 is positioned and fixed so that a raw blank 301b b adjoining behind (on the right side in the drawing) the raw blank 301a faces roughly to the gripper 112. It is noted that the stopper is used also as the separating tool (piercing bite) 114 in the present embodiment.

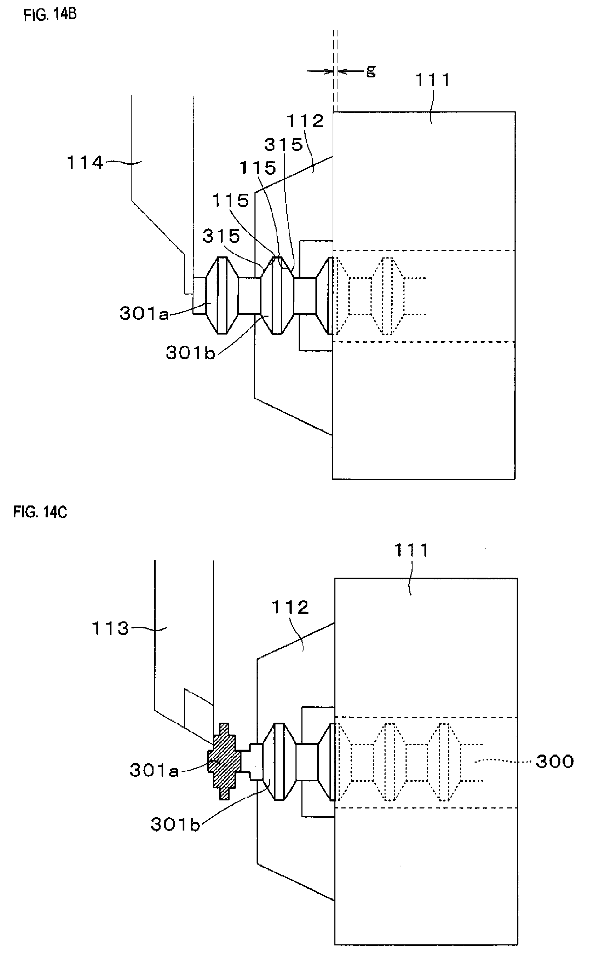

Then, the raw blank 301b is engaged with the concave portion 117 and the work material 300 is gripped as shown in FIG. 14B by moving the gripping claws so as to approach with each other in the condition in which the spindle table 116 freely moves with respect to the slide table 121. Here, the spindle 111 (the spindle table 116) freely moves slightly by g in the axial direction in the process of engaging the raw blank 301b with the concave portion 117 so that the gripping surface 115 of the gripper 112 follows the gripping surface 315 of the work material 300 as the both gripping surfaces 115 and 315 butt with each other.

The relative position in the axial direction of the raw blank 301 and the spindle 111 is defined by moving the spindle table 116 in the axial direction so that the both gripping surfaces (tapered surfaces) 115 and 315 follow with each other. A positioning means for positioning the work material 300 at predetermined position with respect to the spindle 111 in gripping the work material 300 by the gripper 112 is configured by the gripping surfaces 115 and 315 in the present embodiment and the positioning means is provided integrally with the gripper 112 and the work material 300.

Thereby, the axial dimension error caused by the error in fabricating the work material 300, thermal deformation and others is absorbed by gripping the work material 300 by the gripper 112 and relative positioning of the spindle 111 and the work material 300 is also completed along with the gripping operation.

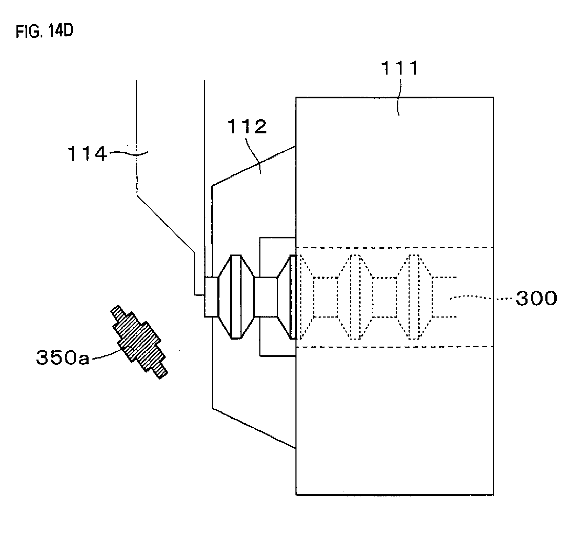

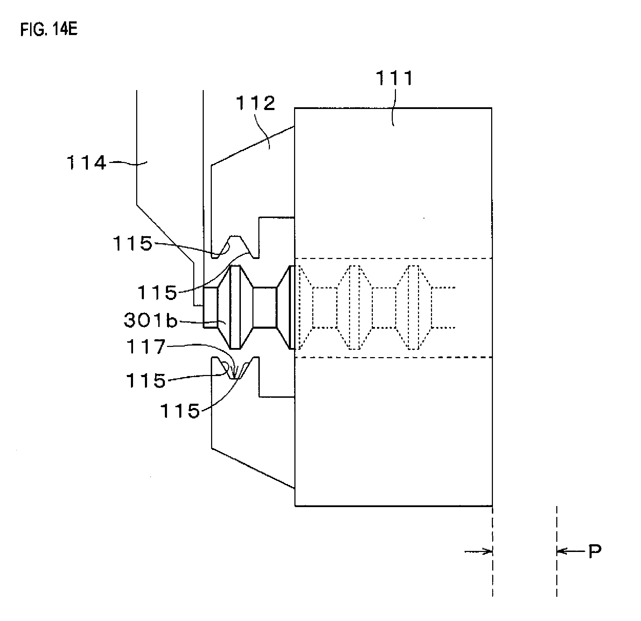

When the spindle table 116 is positioned and fixed with respect to the slide table 121 from the condition shown in FIG. 14B and the spindle 111 is rotated together with the gripper 112, the work material 300 rotates centering on its axis. When the material removing work of the raw blank 301a is finished by the cutting tool 113 as shown in FIG. 14C, the product 350a is separated from the work material 300 by the separating tool 114 and the work is completed as shown in FIG. 14D. Then, the gripper 112 is opened to release the grip on the raw blank 301b as shown in FIG. 14E.

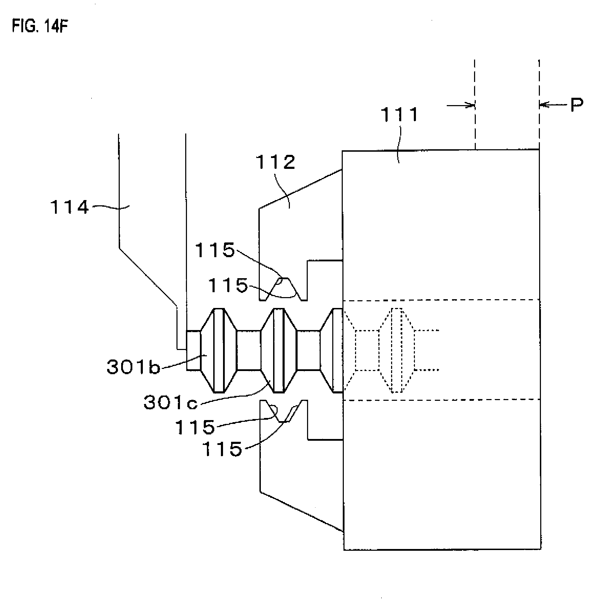

When the spindle 111 is set back by one pitch P of the raw blank 301 in this state by the feed moving means 130 as shown in FIG. 14F and the fixation of the spindle table 116 by the free moving means 120 is released, the gripper 112 grips a raw blank 301c adjoining the raw blank 301b to be worked next similarly to the case shown in FIG. 14B. Thus, the next raw blank 301b can be worked.

A part of error of the pitch of the raw blank 301 is absorbed per work of one raw blank 301 by the move of the spindle from the position shown in FIG. 14A to the position shown in FIG. 14B and the raw blank 301 to be worked is positioned with respect to the spindle 111 within a range of a dimension error of the pitch and shape with the gripped portion (of the adjoining raw blank 301 to be gripped) and accumulates no dimension error by machining the raw blanks 301 sequentially by repeating the abovementioned processes. Accordingly, it becomes possible to lessen the material removing part, to reduce the waste of the material, to lighten the burden for disposing the discharged chips and to prevent unworkable parts from being generated due to the accumulation of the dimension error.

It is noted that the gripping mechanism can be also arranged so as to grip the work material 300 by the spindle 111 (the gripper 112) by freely moving the work material 300 in the axial direction.

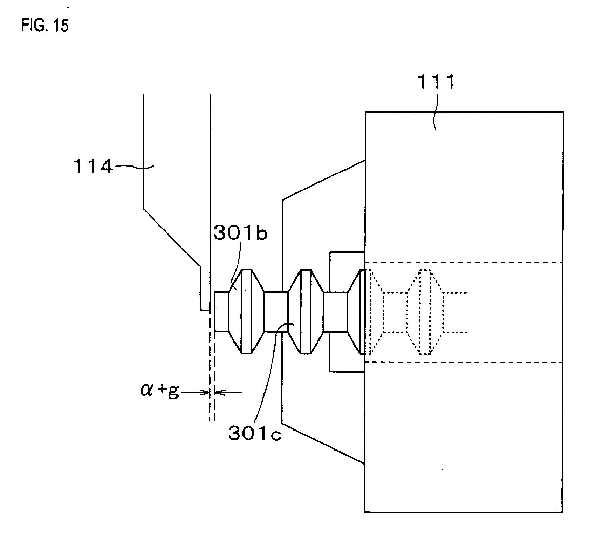

In this case, in gripping the raw blank 301c adjoining the raw blank 301b to be worked by the gripper 112, the work material 300 can be moved freely by positioning and fixing the spindle table 116 with respect to the slide table 121 and by freely moving a push bar of a material feeding machine for feeding the work material 300 in the axial direction. Then, the work material 300 moves freely so that the both gripping surfaces 115 and 315 follow as shown in FIG. 15, an error of positions of the raw blank 301c and the gripper 112 is absorbed, the relative position of the raw blank 301c and the gripper 112 is defined and the work material 300 is gripped by the spindle 111.

It is noted that it is possible to prevent the work material 300 from colliding against the stopper (piercing bite) in gripping the work material 300 by positioning the work material 300 so that it is gripped by the gripper 112 while being always pulled into the spindle 311 side. However, the work material 300 will not collide against the stopper even if the work material 300 is gripped and moved in the direction of projecting out of the spindle 111 by setting back the stopper after positioning the work material 300 by the stopper.

It is noted that the engagement shape of the raw blanks and the gripping surfaces composing the positioning means can be any shape such as one in which the raw blank is concave in section and the gripping surface is convex in section, in contrary to the embodiment described above, as long as the shape defines the relative position of the raw blank and the spindle in the axial direction also in the case of any embodiments described above. It is also possible to have the tapered surfaces on the both sides of the both members in the axial direction as described in the embodiments described above, or on only either one of the raw blank and the gripping surface or on only one of the both sides in the axial direction to define the relative position in the axial direction.

For instance, it becomes possible to define the relative position in the axial direction by the gripping operation by arranging so that the gripping surface is formed to be similar to the convex portion of the raw blanks 101 and 201 of the work materials 100 and 200 and to be concave in section with the tapered surfaces on the both sides thereof in the axial direction in gripping the work material 100 of the first embodiment and the work material 200 of the second embodiment. The relative position in the axial direction can be defined also by the gripping surface having a shape other than the tapered surface such as an irregular fitting shape having a less gap.

It is noted that although the cases (spindle moving-type machine tool) of projecting the raw blanks 301 to be worked sequentially out of the spindle 111 and griping the raw blank 301c adjoining the raw blank 301b to be worked by moving the spindle 111 have been explained in the embodiments described above, it is also possible to project raw blanks 301 to be worked sequentially out of the spindle by moving the work material 300 similarly to a conventional rod member in a case of a spindle fixed-type machine tool. It becomes possible to position the spindle and the work material 300 and to grip the work material 300 in the same manner as described above also in this case by allowing at least one of the spindle and the work material 300 to freely move in the axial direction of the spindle in gripping the raw blank 301c adjoining the raw blank 301b to be worked.

When the work material 400 of the fourth embodiment is gripped by the gripping mechanism, the relative position in the axial direction of the adjoining raw blank 401 and the spindle 111 is defined by the gripping operation of the gripping surface 115 of the gripper 112 by forming the gripping surface 115 into a convex shape in section having tapered surfaces that engage with tapered surfaces 415 of the gripping boss 404 before and after thereof in the axial direction as shown in FIG. 6. It is noted that the shape of engagement of the gripping boss 404 and the gripping surface 115 composing the positioning means can be any shape as long as it defines the relative position in the axial direction of the adjoining raw blank and the spindle in the same manner with the first embodiment described above.

Still more, the work material 400 of the fourth embodiment can be worked without changing the gripper by unifying the shape of the gripping boss even if the work material has a peculiar shape or is composed of different raw blanks, so that it is possible to shorten a handling time not involved in the work and to shorten a time required for producing the plurality of products as a whole.

It is noted that although the embodiment of the gripping mechanism described above has been explained by exemplifying the case of gripping the work material of the third embodiment which is a rod-like work material in which the plurality of raw blanks is integrated, the individual raw blanks can be supplied by some handling means. Still more, it is possible to drive the spindle table 116 by adopting a linear driving means that allows drive, fixation and free movement of the spindle table 116 and is capable of control position thereof such as a linear motor-type slide-moving mechanism for example for the feed moving means 130 and to use the feed moving means also as the free moving means by putting the feed moving means in a free movement condition.

### List of reference signs

- 100: work material
- 200: work material
- 300: work material
- 400: work material
- 500: work material
- 101: raw blank
- 201: raw blank
- 301: raw blank
- 401: raw blank
- 501: raw blank
- 202: through hole
- 202: through rod
- 404: gripping boss
- 108: margin of separation
- 208: margin of separation
- 308: margin of separation
- 408: margin of separation
- 109: material removing part
- 209: material removing part
- 309: material removing part
- 409: material removing part
- 509: material removing part
- 110: gripping mechanism
- 111: spindle
- 112: gripper
- 113: cutting tool
- 114: separating tool
- 115: gripping surface
- 116: spindle table
- 117: concave portion
- 120: free moving means
- 121: slide table
- 122: stopper
- 123: cylinder
- 124: piston
- 125: rail
- 130: feed moving means
- 131: motor
- 132: ball screw shaft
- 133: ball nut
- 140: base table
- 150: product
- 250: product
- 350: product
- 450: product
- 550: product

## Claims

1. A work material (100) for producing a plurality of products (150) by machining material removing parts (109) by material removing works, **characterized in that** said work material (100) has a shape in which a plurality of raw blanks (101) that become the products (150) by the material removing works is integrally molded.

2. The work material according to claim 1, **characterized in that** each of said raw blanks is integrally formed so as to be aligned in a row while providing margins of separation between the respective raw blanks.

3. The work material according to claim 1, **characterized in that** each of said raw blanks has a through hole (202) and is integrally formed by being fixed to a rod member (203) that penetrates through the through hole (202).

4. The work material according to any one of claims 1 through 3, **characterized in that** said material removing work is a cutting work, including a separating work, carried out consecutively and sequentially on each raw blank.

5. The work material according to any one of claims 1 through 4, **characterized in that** said respective raw blanks include ones for producing products having different shapes.

6. The work material according to any one of claims 1 through 5, **characterized in that** a plurality of gripped portions that define axial gripping positions of each raw blank is integrally formed corresponding to each of said plurality of raw blanks.

7. The work material according to claim 6, **characterized in that** said gripped portion is composed of each raw blank.

8. The work material according to claim 6, **characterized in that** said gripped portion is provided at a separating part adjoining each raw blank.

9. The work material according to any one of claims 6 through 8, **characterized in that** said gripped portion is composed of an irregular portion.

10. The work material according to any one of claims 6 through 9, **characterized in that** said gripped portion is composed of a tapered surface.

11. The work material according to any one of claims 6 through 10, **characterized in that** the gripped portion closest to the raw blank to be worked is gripped in the material removing work of the predetermined raw blank.

12. A gripping mechanism (110) having a gripper (112) for gripping a work material (100) in a spindle (111), **characterized in that** said gripping mechanism comprises:
a free moving means (120) for relatively freely moving said spindle and the work material in an axial direction; and
a positioning means for positioning relative position of said work material and said spindle at predetermined position in the axial direction set in advance;
wherein said positioning means is arranged, in gripping said work material, so as to relatively and freely move said spindle and said work material by said free moving means and to grip said work material by the gripper in the condition in which said spindle and said work material are positioned.

13. The gripping mechanism according to claim 12, **characterized in that** said positioning means is what freely moves one of said spindle and said work material in the axial direction while fixing the other one.

14. The gripping mechanism according to claim 12 or 13, **characterized in that** said gripping mechanism further comprises a feed moving means (130) for work-feeding said spindle in the axial direction, wherein said feed-moving means is used also as said free moving means as drive and fixation thereof is released in gripping the work material by the gripper.

15. The work material according to any one of claims 12 through 14, **characterized in that** said positioning means is composed of a tapered surface provided at least at one of the gripped portion of said gripper and said work material.
